# EUROPEAN PATENT APPLICATION

(11) **EP 4 755 634 A1**
(43) Date of publication of application: **10.06.2026**
(21) Application number: 24218012.3
(22) Date of filing: 06.12.2024
(51) Int. Cl.: B32B 41/00

(54) **DEVICE AND METHOD FOR CONTROLLING A LAMINATION PROCESS**

(71) Applicant: Henkel AG & Co. KGaA, 40589 Düsseldorf (DE)
(72) Inventor: Welters, Tim, 40723 Hilden (DE); Ethner, Kai, 40764 Langenfeld (DE); Gabhale, Ramkrishna Ramesh, 40591 Düsseldorf (DE); Barros Abreu, Helder, 40476 Düsseldorf (DE); Drobnik, Michael, 42699 Solingen (DE); Hamm, Marc, 40229 Düsseldorf (DE)

(57) **Abstract**

According to various embodiments, a method for controlling a lamination process, in which a secondary film is laminated to a carrier film by means of an adhesive along a conveying path in a lamination machine to form a laminate, is described, comprising determining one or more control parameters from a set of input parameters by means of a machine-learning model and controlling the lamination process according to the one or more control parameters.

## Description

The present disclosure relates to devices and methods for controlling a lamination process.

Laminates consist of plastic film, paper or metal foils, bonded together to be used for applications like packaging, construction material, protective layers or others multi-layer applications. For laminate manufacturers, the consistent quality of laminates and the efficiency in the continuous lamination production process is very important and has a significant commercial, technical performance and company reputation impact.

A laminate is created by bonding of two or more substrates with a layer of adhesive between them to ensure a permanent bonding of both surfaces in a lamination process. Current solutions for controlling a lamination process typically depend on operator experience and knowledge.

However, with increasing shortage of manpower and deteriorating education levels in the industry, controlling a lamination process by a human operator becomes more challenging. Further, the complexity of creating laminates is rising in complexity due to new film materials, higher demand for process optimization, recyclability and sustainability requirements like energy consumption and other new needs by the industry.

Furthermore, existing solutions visualizing and analysing sensor data from lamination machines focus on machine components and status, e.g. for predictive maintenance or optimization of energy consumption. Traditional quality control mechanisms and insights depend on off-line laboratory data with significant time delay.

Accordingly, approaches to control a lamination process effectively to produce laminates which fulfil high quality requirements are desirable.

According to various embodiments, a method for controlling a lamination process, in which a secondary film is laminated to a carrier film by means of an adhesive along a conveying path in a lamination machine to form a laminate, is provided, comprising determining one or more control parameters from a set of input parameters by means of a machine-learning model, wherein the set of input parameters includes one or more of:
- a tension of the carrier film, the secondary film and/or the laminate at one or more points of the conveying path;
- a temperature of one or more components of the conveying path;
- a pressure applied to the carrier film, the secondary film and/or the laminate at one or more points of the conveying path;
- a temperature of the carrier film, the secondary film, the adhesive and/or the laminate at one or more points of the conveying path;
- an unwinding speed of the carrier film and/or the secondary film;
- a rewinding speed of the laminate;
- a coating weight of the adhesive;
- an electrical power which a corona station of the conveying path applies to the carrier film and/or the secondary film;
- a humidity and/or temperature of air surrounding the carrier film, the secondary film and/or components of the lamination machine;
- material properties of the carrier film and/or the secondary film;
- material properties of the uncured adhesive; and
controlling the lamination process according to the one or more control parameters.

Embodiments of the invention are shown in the figures and will be described in more detail in the following.
- Figure 1: shows a lamination arrangement according to an embodiment.
- Figure 2: shows a lamination machine in more detail.
- Figures 3 A to 3G: show a table giving the impact of input parameters as given above on quality parameters of the laminate.
- Figure 4: shows a flow diagram illustrating a method for controlling a lamination process according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

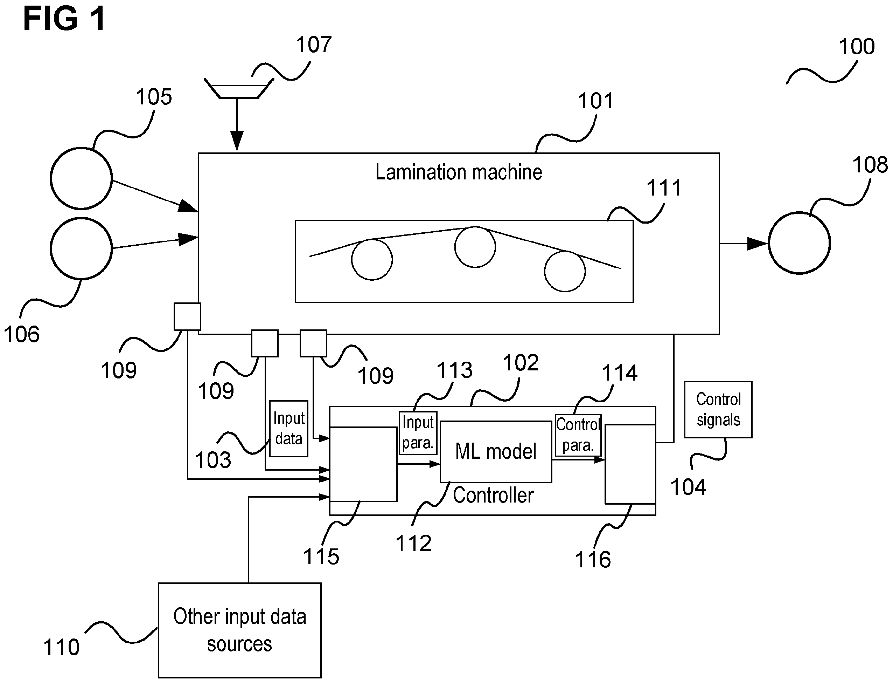

Figure 1 shows a lamination arrangement 100 according to an embodiment.

The lamination arrangement 100 comprises a lamination machine 101 which is controlled by a controller 102. The controller 102 receives input data 103 and generates control signals 104 for the lamination machine 101 using the input data 103 (i.e. depending on the input data 103) and controls the lamination machine 101 in accordance with the control signals 104.

The lamination machine 101 is supplied with a carrier film 105, a secondary film 106 (which are typically winded up, i.e. on reels supplied to the lamination machine 101) and an adhesive 107 and produces from those a laminate 108.

At least a part of the input data 103 is supplied by sensors 109. The sensors 109 are for example part of the lamination machine 101 but may for example also be arranged and configured to measure properties of the carrier film 105, the secondary film 106 and the adhesive 107 before they are supplied to the lamination machine 101, e.g. are arranged at a storage of one or more of the carrier film 105, the secondary film 106 and the adhesive 107 and, for example, configured to measure a storage temperature and/or humidity of one or more of the carrier film 105, the secondary film 106 and the adhesive 107.

A part of the input data 103 may also be supplied from other input data sources 110 other than the sensors 109. For example, the controller may receive a part of the input data 103 via a human machine interface (i.e. a user may input at least a part of the input data) or a network interface (i.e. receive a part of the input data from another data processing system, e.g. a data server). For example, the other input data sources 110 may provide information about material properties of the carrier film 105, the secondary film 106 and/or the adhesive 107 such as a layer configuration (e.g. number of layers and thicknesses) or a chemical composition.

The lamination machine 101 bonds the secondary film 106 to the carrier film 105 using the adhesive 107 by means of a conveying path 111.

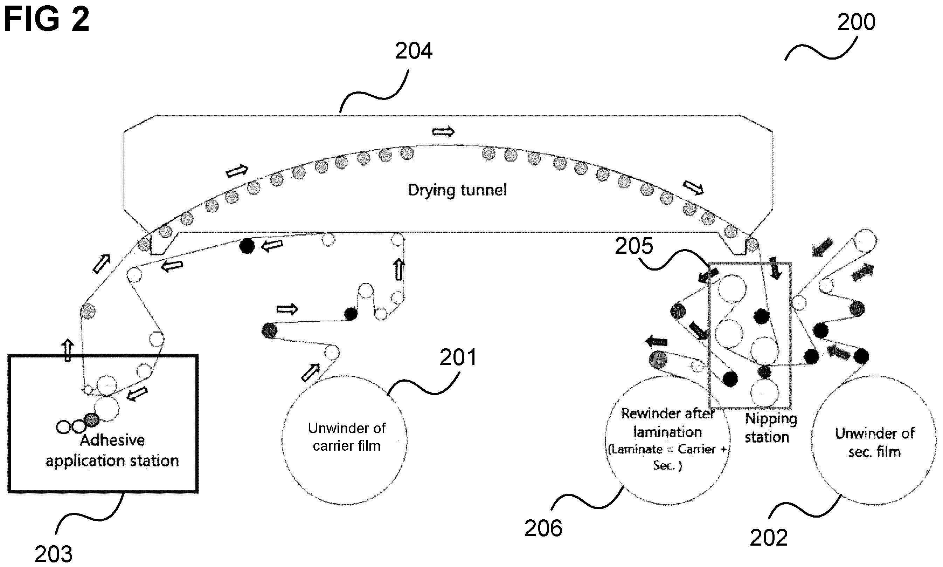

Figure 2 shows a lamination machine 200 in more detail.

The lamination machine 200 comprises a conveying path in the form of an arrangement of rollers transporting the carrier film 105, the secondary film 106 and the laminate 108. In particular, the conveying path comprises (at least) one unwinder 201 for the carrier film 105 and an unwinder 202 for the secondary film 106, and rollers (illustrated by circles) which transport the carrier film 105 to an adhesive application station 203 of the lamination machine 200 which applies the adhesive 107 (e.g. supplied in an adhesive pan or a rollers carrying the adhesive) to the carrier film 105, to a drying tunnel 204 (for solvent and water-based adhesives) of the lamination machine 200, and a nipping station 205 of the lamination machine 200 where the carrier film 105 (with the adhesive 107) is bonded to the secondary film 106 (which is also supplied to the nipping station 205 by rollers of the conveying path) to form the laminate 108. Further rollers (downstream of the nipping station 205) transport the laminate 108 to the rewinder 206 for the laminate 108 (which winds the laminate 108 onto a reel and which can also be seen to be a part of the conveying path).

So, the adhesive 107 is applied to one of the substrates in the adhesive application station (in the present example to the carrier film 105) and is subsequently pressed against a second substrate (here the secondary film 106) in the nipping station 205 with the help of two rollers. In case of a solvent and a water-based adhesives, it is dried in the drying tunnel 204 (which may be omitted in other cases). After the processing in the nipping station 205, the adhesive 107 adheres to both substrates 105, 106 and impacts or determines different performance and process properties or functions of the laminate 108 (e.g. bond strength, optics, telescoping tendency, process stability). The conveying path may further comprise one or more chilled rollers downstream of the nipping station 205 downstream of the nipping station in the lamination process to cool the laminate 108, ensuring that the adhesive viscosity increases properly and achieves a smooth finish.

The quality of the bond between the carrier film 105 and the secondary film 106 by means of the adhesive 107 and with that the quality of the laminate 108 is influenced by many parameters such as the materials used, e.g. the pot life of the adhesive, surface roughness, substrate pre-treatment, adhesive application temperature, adhesive application pressure, adhesive thickness, substrate bonding temperature, substrate bonding pressure, adhesive composition, process speed, tension on substrates, lay-on roller pressure, rewind tension, curing time, curing temperature, curing humidity.

The quality of the bond may be defined by one or more of bond strength, surface optics and geometrical flatness over the surface.

The carrier film 105 and the secondary film 106 are typically 6-400 µm thick and made out of PET (Polyethylene Terephthalate), PE (Polyethylene), PP (Polypropylene), other plastics, paper or metal or combinations of these. As adhesive 107, one or more of polyurethane, latex (water-based), epoxy, acrylic may be used by the adhesive is not necessarily limited to those.

The application of combining the two substrates (i.e. the carrier film 105 and the secondary film 106) and applying the adhesive layer (i.e. a layer of the adhesive 107 on the carrier film 105) between those two layers is conducted by the lamination machine 101 in a continuous process with performance influencing parameters, as speeds, pressures, temperatures, geometry, pre-treatment, winding tension, film tension and further.

When a lamination process is manually controlled by an operator, the performance of the lamination process (i.e. the laminate manufacturing process) results in a quality of the product (i.e. the laminate) which depends a lot on the knowledge and experience of the operator who steers and controls the process. During the lamination process some guiding data points (i.e. quality parameters) may be measured to indicate the process performance and relate to product quality. After creating the laminate, measurements taken in a laboratory can be used judge the quality of the laminate (i.e. to determine the quality parameters), like for example bond strength, optical appearance, coefficient of friction and other data points.

According to various embodiments, instead of manually controlling the lamination process, the controller 102 automatically controls the lamination process using digital technologies, e.g. based on a combination of online process data, offline laboratory (i.e. measurement) data and historical data. For this, according to various embodiments, the controller 102 comprises a (digital) machine-learning (ML) model 112 which is trained to analyse input parameters 113 supplied to it (derived from the input data 103) and generate one or more control parameters 114 from the input parameters 113 (and thus the input data).

For example, the controller comprises an input pre-processor 115 which generates the input parameters 113 from the input data 103 and a control signal generator 116 which generates the control signals 104 in accordance with the one or more control parameters 114.

The part of the input data from the other input data sources 110 may also be further control parameters which are not determined by the ML model 112 but set by the controller 102 based on other data than the output of the ML model 112, e.g. set according to input by a human operator.

The ML model 112 (e.g. a neural network, for example a fully-connected neural network but, depending on the form of the input data, possibly comprising an architecture (or sub-networks) suitable for processing the respective form of input data, e.g. convolutional layers for images or time series data) can be trained (by the controller 102 itself or by another data processing device to be then transferred to the controller 102) with respect to optimizing one or more the quality parameters of the laminate 108. This may be done by using an approach like reinforcement learning, where a quality feedback is fed back to the ML model 112 to give it a reward depending on the quality parameters or by training the ML model 112 using supervised training by means of training examples which specify, for training input parameters, target control parameters (i.e. training labels) which are suitable for the training input parameters to give high quality (e.g. fulfil predetermined quality requirements). As an alternative, using an approach like unsupervised learning may also be a possibility.

In this manner, the controller 102 can, by leveraging artificial intelligence, optimize the laminate quality and process performance. It can also show areas of deviation from an optimal process window and predict an effect of input parameters on the quality of the laminate 108.

Using historical data of similar but not same process and product scenarios for (e.g. supervised) training of the ML model 112 (e.g. as starting point for a further refinement of the ML model 112 using reinforcement learning), the ML model 112 can predict best conditions (i.e. control parameters) to achieve required target qualities. That approach detaches process performance and laminate quality from the experience of the operator and allows fast reactions to changing requirements. It also supports identification of best production parameters and to reduce scrap.

For example, the ML model 112 predicts (i.e. determines) laminate and process parameters, in particular the control parameters 114, in real-time, e.g. with a delay of less than 10 seconds, based on in-line process measurements (i.e. sensor data provided by the sensors 109 included in the input data 103), setpoint values of the controller (i.e. set by a component of the controller based on other data than the output of the ML model 112, e.g. set according to input by a human operator) and/or properties of the substrates.

The performance and quality of the laminate produced can be measured and assessed using different tests and criteria, e.g. bond strength measurements, curling measurements, telescoping measurements, determining the number and size of optical defects. The performance and stability of the lamination process can be measured in different dimensions, e.g. telescoping risk, coat weight variability, process speed, production output, variability of web tensions, OEE (Overall Equipment Effectiveness) and energy consumption.

The ML model 112 can be configured, trained and/or operate based on data without specific knowledge of the lamination process physics, on a physical description in form of equations or a combination of both.

This data (in particular training data (including e.g. rewards or labels) and/or input data 103) can come from
- in-line process measurements, from e.g. temperature sensors, pressure sensors, camera pictures, strain gauges, accelerometers, displacement transducers, load cells
- off-line measurements on laminates or substrates, e.g. laminate bond strengths and curl tendency, tensile strengths of substrates, viscosity of adhesive, surface tension
- process setpoint values or substrate properties provided by the controller 102 (e.g. according to instructions from a manufacturing execution system or a human operator), e.g. substrate speeds, setpoint temperatures, pressures or tensions, substrate and adhesive grades.

The ML model 112 can be designed based on e.g.
- regression, classification, machine learning and/or
- a set of differential equations capturing the physics of the process

The ML model 112 can be used to e.g.
- visualize the process status and laminate performance
- optimize process stability, efficiency, laminate performance or production output by giving advice to an operator or by directly controlling the lamination machine
- train personnel
- cost optimization

The control parameters according to which the controller 102 generates the control signals 104 (i.e. controls the lamination machine 101) including in particular the one or more control parameters 114 include for example one or more of the following:
- adhesive selection (i.e. which adhesive is used in case there are multiple)
- adhesive mixing (i.e. in what ratio multiple adhesives (i.e. adhesive components) are mixed and/or which components are used)
- adhesive temperature
- gap management (e.g. gap temperature and gap distance and pressure) of the gap between rollers, in particular of the nipping station 205, i.e. in particular nip temperature and nip pressure
- transfer roller pressure
- adhesive application temperature
- adhesive application pressure
- unwinder tensions
- bridge tensions (i.e. substrate or laminate tensions between transfer rollers)
- chill temperature, Lay on roller pressure, rewind tension, taper tension reduction,
- rubber roller hardness
- substrate elasticity properties
- substrate surface tensions
- corona power, i.e. power of a corona station, e.g. arranged before (upstream) the nipping station 205
- humidity in the lamination machine (if that is controllable)
- curing temperature
- time of curing.

Examples for the substrates (i.e. carrier film 105 and secondary film 106) are thermoplastic materials, PE (Polyethylene), PP (Polypropylene), thermostable materials, PET (Polyethylene Terephthalate), PA (Polyamide), oriented and not oriented, with and without a metallic layer, additives (ESA (Ethylene Stearic Acid), EVA (Ethylene Vinyl Acetate), EVOH (Ethylene Vinyl Alcohol) etc.), barriers properties, coatings, (SiOx, AlOx, PVDC (Polyvinylidene Chloride) etc.), aluminium foil and paper. The substrates for example have a thickness between 6 and 400 µm and width between 250 and 4000 mm.

The adhesive 107 is for example based on polyurethane. It may be solvent free and solvent based, synthetic latex and acrylic water based, and epoxy solvent free. It is for example applied with a coat weight between 1 to 3 gsm (grams per square meter) for solvent free and at temperatures between 30°C and 80°C, 1 to 6 gsm for solvent base and water base and at temperatures room temperature using drying tunnel that can vary from 65 till 100°C.

In case of a solvent free lamination machine 101, the gap distance between rollers (e.g. where the adhesive 107 is applied to the carrier film 105) is for example between 0,06 to 0,15mm and the temperature is e.g. between room temperature to 70°C. Transfer roller pressure (between two rollers through which the carrier film 105 with adhesive runs or where the adhesive is applied to the carrier film 105) is e.g. between 1 and 5 bars. Lamination speed is e.g. between 10 m/min and 500 m/min. Nipping pressure is also e.g. between 1 and 5 bars and nipping roller temperatures also between room temperature (RT) and 70 °C. Unwinder and rewinder (web) tensions are for example between 20N and 300N. Chill roller temperatures are e.g. between 10°C and room temperature. The lay on roller pressure of the rewinder 206 may also be between 1 and 5 bars.

In case of a solvent-based and water-based lamination machine 101, a gravure roller, with different geometries to define coating weight may be used. As in the solvent free case, transfer roller pressure (between two rollers through which the carrier film 105 with adhesive runs) is e.g. between 1 and 5 bars and temperature is e.g. between room temperature and 70 °C. Drying tunnel temperature may for example between 50°C and 150°C. Lamination speed is e.g. between 10 m/min and 500 m/min. Nipping pressure is also e.g. between 1 and 5 bars and nipping roller temperatures also between room temperature (RT) and 70 °C. Unwinder and rewinder (web) tensions are for example between 20N and 300N. Chill roller temperatures are e.g. between 10°C and room temperature. The lay on roller pressure of the rewinder 206 may also be between 1 and 5 bars.

The input parameters 113 may include one or more of the following:
- tensions in the different substrates and in the laminate along the conveying path (e.g. measured as torque applied to a roller or using Dancer roller tension control systems):
   ∘ unwinder tensions in the carrier film and the secondary film
   ∘ bridge tension after the adhesive application station 203
   ∘ unwinder tension in the secondary film
   ∘ rewinder tension
   ∘ taper tension
- temperatures of rollers along the conveying path (e.g. based on coolant temperature or pyrometer measurements on the roller surface):
   ∘ temperature of an adhesive dispensing roller
   ∘ temperature at the (adhesive) application roller
   ∘ temperature at the nipping roller(s)
- pressures applied to the substrate or the laminate by rollers along the conveying path (e.g. measured as air or liquid pressures in a pneumatic or hydraulic system):
   ∘ between transfer roller and adhesive application roller
   ∘ by the adhesive application roller
   ∘ by the nipping roller
- temperatures on the substrate and laminate surfaces (e.g. measured contactless by infrared radiation e.g. pyrometer):
   ∘ initial carrier film surface temperature
   ∘ temperature on the carrier film or the adhesive surface after adhesive application, before the drying tunnel, after the drying tunnel, before the nipping station
   ∘ temperature on either side of the secondary film
   ∘ temperature on either side of the laminate after the nip station, behind the chilled rollers and just before it is wound up
- speeds (e.g. measurement based on revolution speed of rollers):
   ∘ unwinder speeds for the carrier film and the secondary film
   ∘ rewinder speed
- adhesive coating weight e.g. measured by
   ∘ IR (infrared) absorption of reactants and / or chemical products
   ∘ weight measurement
   ∘ ellipsometry
   ∘ thickness measurement based on IR reflection
- parameters of surface or substrate treatment:
   ∘ electrical Power of a Corona station applied to the carrier and secondary film
- environmental conditions:
   ∘ humidity in the air close to (i.e. surrounding) the lamination machine 101 at different positions
   ∘ air temperature close to the lamination machine 101 at different positions
   ∘ storage conditions (humidity and temperature) of the reels (holding the substrate or holding the laminate)
- characteristics of the films (in particular material properties):
   ∘ material specification, manufacturer, production process used, layer configuration (e.g. number of layers and thicknesses)
   ∘ chemical composition
   ∘ temperature before processing and environmental storage conditions (temperature and humidity) before processing
   ∘ surface energies
   ∘ surface texture and roughness
   ∘ coefficients of friction
   ∘ production dates and shelf life
   ∘ print pattern, chemical composition and pigmentation of the inks used
- characteristics of the adhesive (in particular material properties):
   ∘ chemical composition and type of adhesive
   ∘ rheology, e.g. temperature and shear rate dependent viscosities
   ∘ surface tension of the adhesive
   ∘ pot life of the adhesive
   ∘ mixing ratio
   ∘ storage history (e.g. humidity and temperature) of the adhesive
   ∘ temperature of the adhesive in the application unit

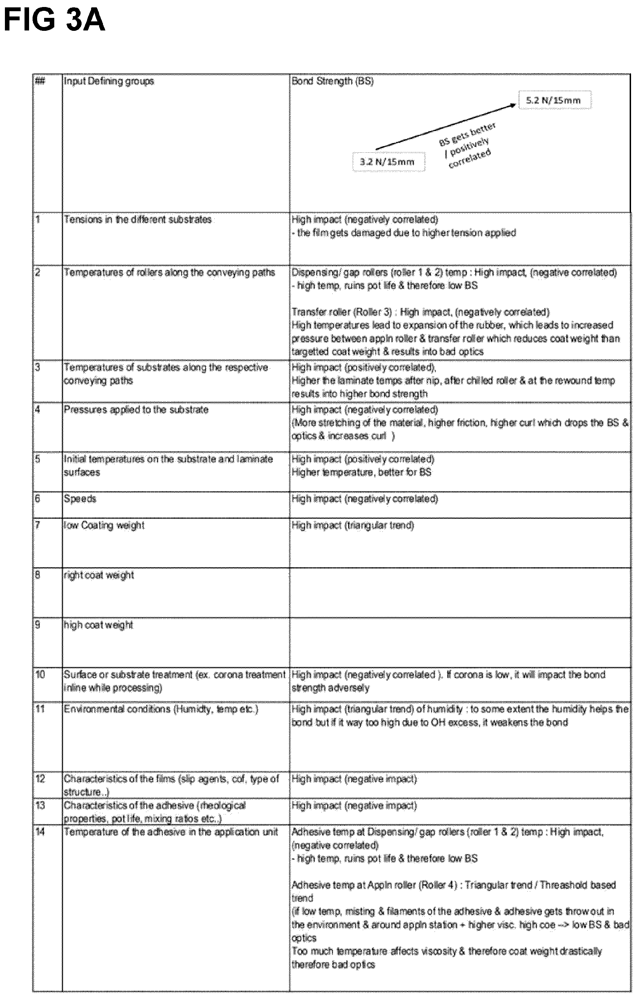

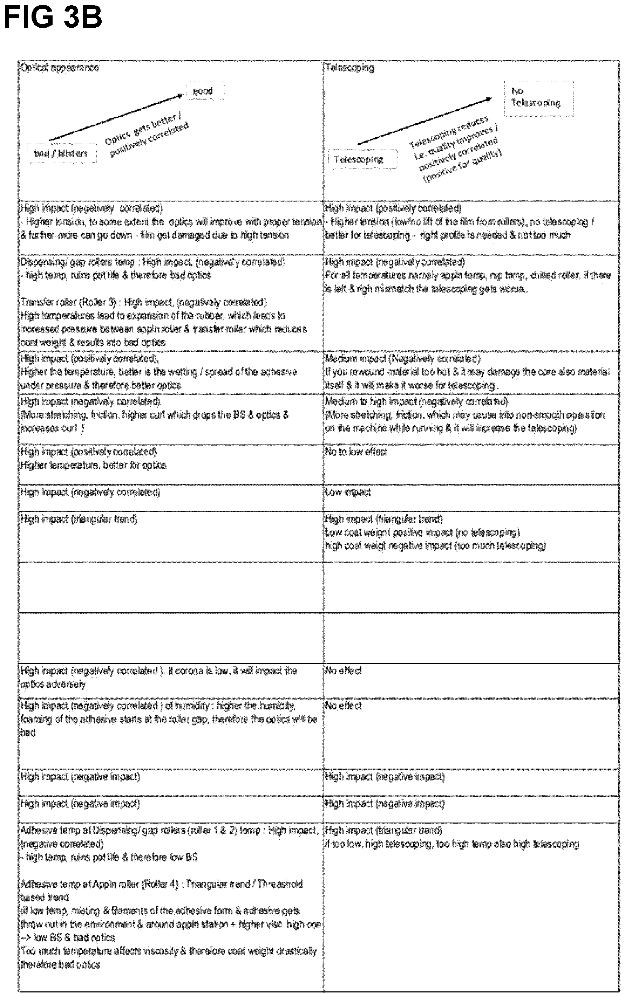

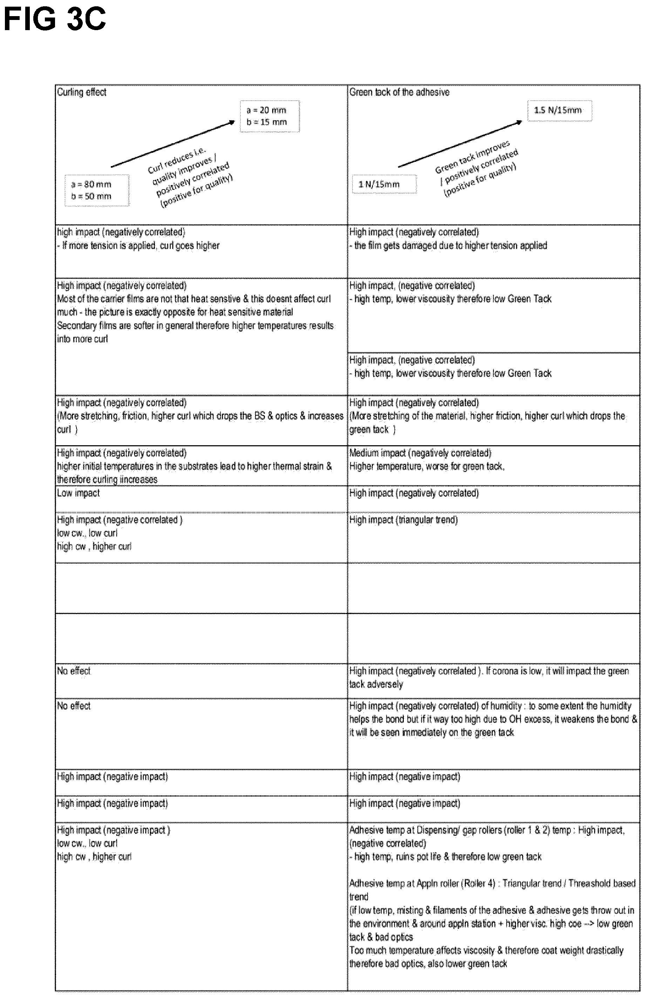

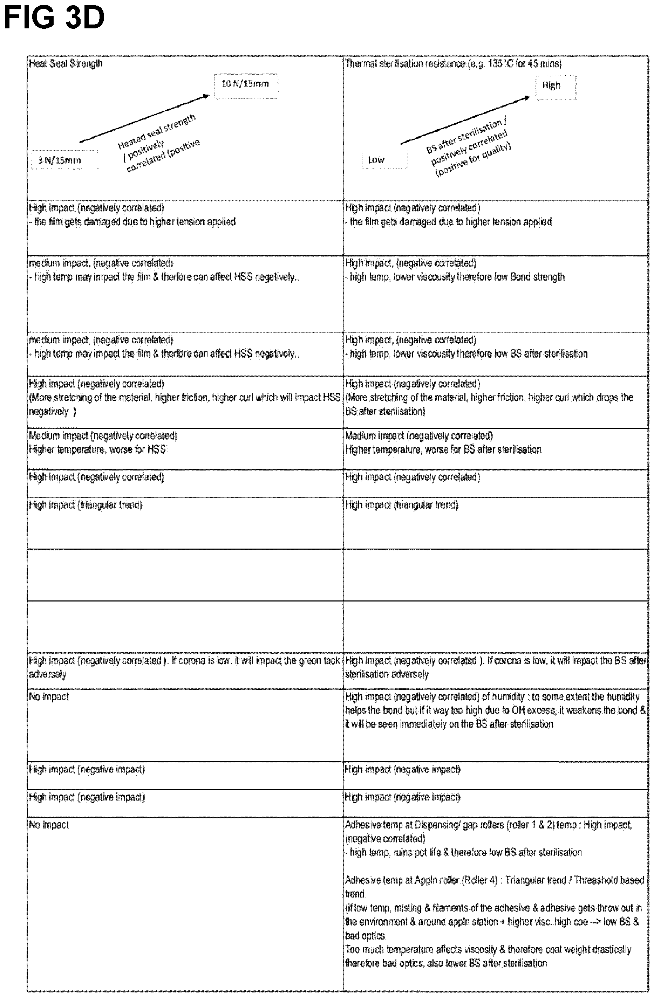

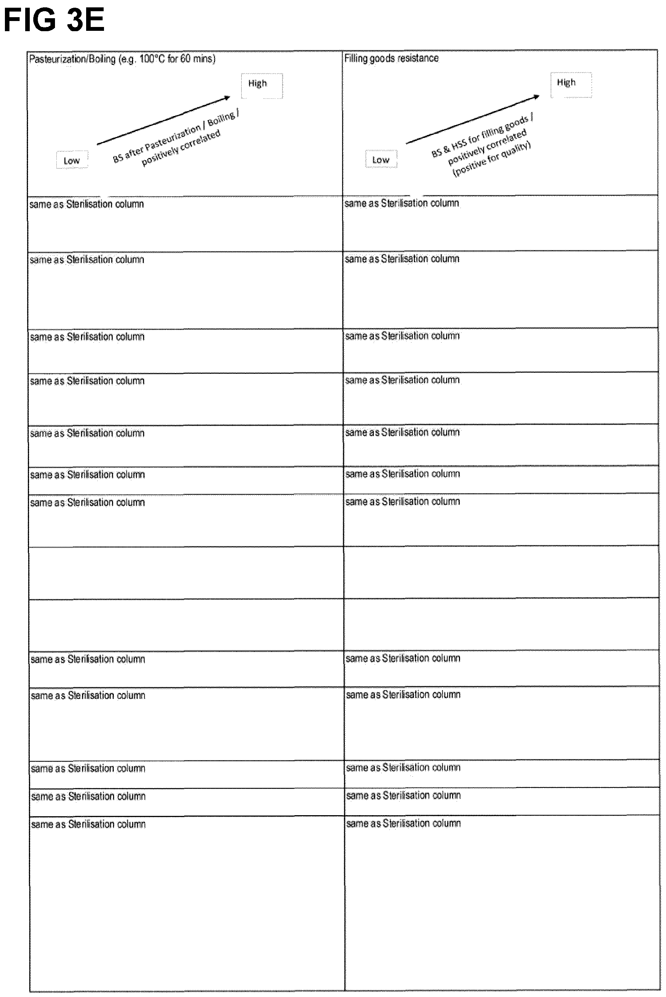

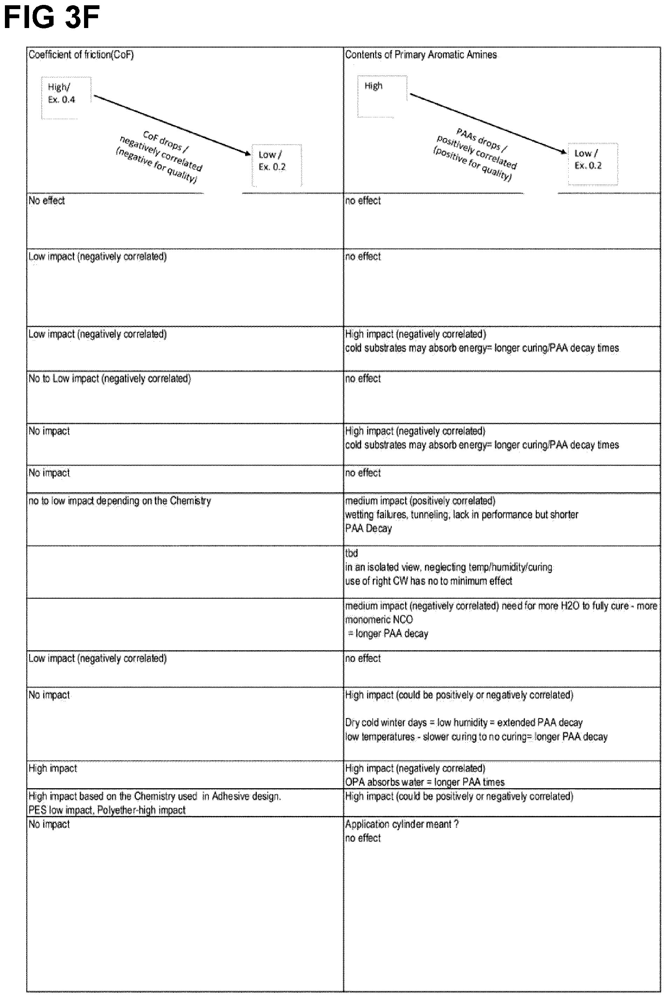

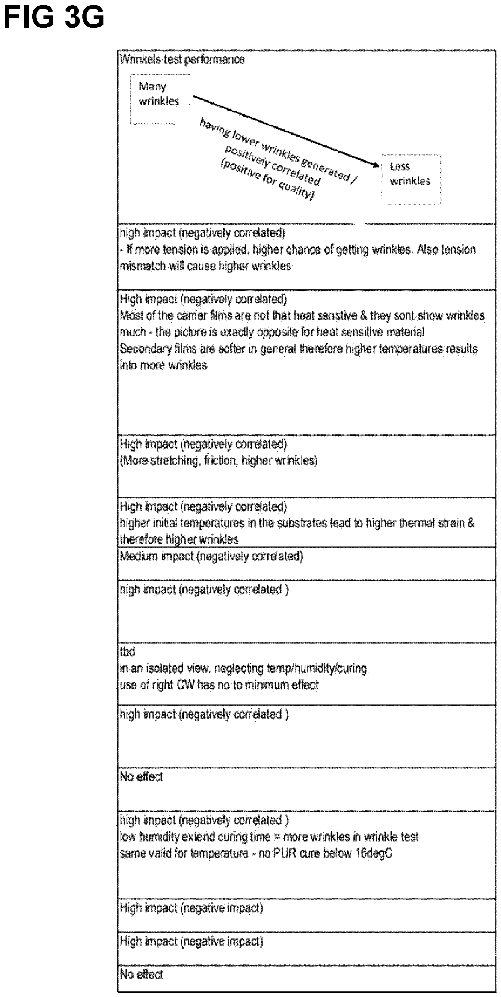

Figures 3 A to 3G show a table giving the impact of input parameters as given above on quality parameters of the laminate 108.

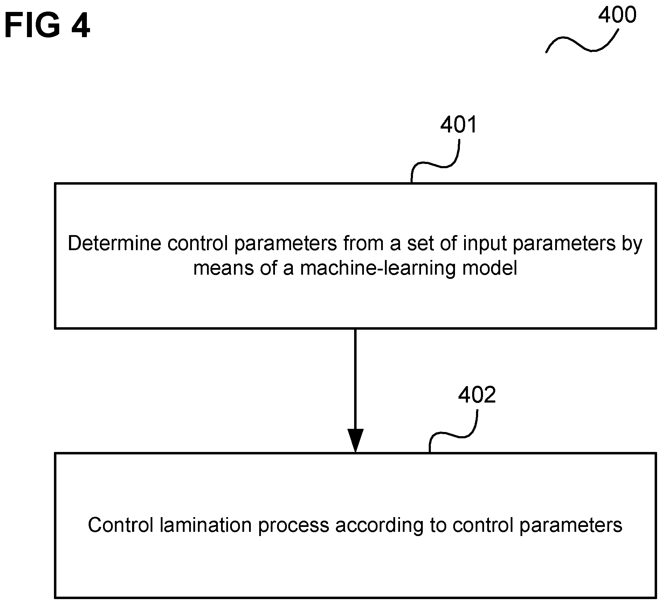

In summary, according to various embodiments, a method is provided as illustrated in figure 4.

Figure 4 shows a flow diagram 400 illustrating a method for controlling a lamination process according to an embodiment.

In the lamination process, a secondary film is laminated to a carrier film by means of an adhesive along a conveying path in a lamination machine to form a laminate.

In 401, one or more control parameters are determined from a set of input parameters by means of a machine-learning model, wherein the set of input parameters includes one or more of:
- a tension of the carrier film, the secondary film and/or the laminate at one or more points of the conveying path;
- a temperature of one or more components of the conveying path;
- a pressure applied to the carrier film, the secondary film and/or the laminate at one or more points of the conveying path;
- a temperature of the carrier film, the secondary film, the adhesive and/or the laminate at one or more points of the conveying path;
- an unwinding speed of the carrier film and/or the secondary film;
- a rewinding speed of the laminate;
- a coating weight of the adhesive;
- an electrical power which a corona station of the conveying path applies to the carrier film and/or the secondary film;
- a humidity and/or temperature of air surrounding the carrier film, the secondary film and/or components of the lamination machine;
- material properties of the carrier film and/or the secondary film; and
- material properties of the uncured adhesive.

In 402, the lamination process is controlled according to the one or more control parameters.

According to various embodiments, a control method for a lamination process for example uses in-line process measurements from a continuous lamination process, joining two flexible substrates with the help of an adhesive. These may be used in combination with off-line performance measurements of the produced laminate and the materials (e.g. measured in a quality laboratory) used as an input to a (digital) machine-learning model for controlling the lamination process but possibly also to visualize, predict or control product performance and process status and efficiency in real time.

According to various embodiments, in other words, a digital machine-learning model is provided which gives advice on process setpoints or directly controls a lamination machine, wherein the machine-learning model processes one or more input parameters of the above list (which have an impact on laminate quality, i.e. quality parameters of the laminate).

In contrast to a manual controlling approach, the method of figure 4 does not require experienced operators to decide on setpoint parameters for the lamination process for achieving good results. It allows taking into account a complex set of substrate, adhesive, machine and environmental properties and conditions. With the approach of figure 4, suitable control parameters can be efficiently found.

The method of figure 4 may or may not be fully automated, i.e. a human user may or may not be taken into the control loop. For example, determining one or more control parameters from a set of input parameters by means of a machine-learning model may mean generating candidates for the one or more control parameters but a human user may still adjust these candidate control values or select from them to generate the final control parameters used for controlling the lamination process.

The method of Figure 4 may be performed by one or more data processing devices (e.g. computers or microcontrollers) having one or more data processing units. The term "data processing unit" may be understood to mean any type of entity that enables the processing of data or signals. For example, the data or signals may be handled according to at least one (i.e., one or more than one) specific function performed by the data processing unit. A data processing unit may include or be formed from an analog circuit, a digital circuit, a logic circuit, a microprocessor, a microcontroller, a central processing unit (CPU), a graphics processing unit (GPU), a digital signal processor (DSP), a field programmable gate array (FPGA), or any combination thereof. Any other means for implementing the respective functions described in more detail herein may also be understood to include a data processing unit or logic circuitry. One or more of the method steps described in more detail herein may be performed (e.g., implemented) by a data processing unit through one or more specific functions performed by the data processing unit.

Accordingly, according to one embodiment, the method is computer-implemented.

In the following, various examples are given.

Example 1 is a method for controlling a lamination process as described with reference to figure 4.

Example 2 is the method of example 1, comprising gathering sensor data and deriving values of the one or more input parameters of the set of input parameters from the sensor data.

Example 3 is the method of example 2, wherein the sensor data comprises sensor data about the lamination process while it is being performed.

Example 4 is the method of example 2 or 3, wherein the sensor data comprises sensor data about the carrier film, the secondary film, the adhesive and/or the lamination machine before the lamination process is performed.

Example 5 is the method of any one of examples 1 to 4, wherein the one or more control parameters include one or more of:
- an adhesive selection;
- an adhesive component mixing ratio;
- an adhesive temperature;
- an adhesive application pressure;
- a gap temperature, distance and or pressure of one or more rollers of the conveying path;
- a tension of an unwinder of the carrier substrate and/or the secondary substrate, of
- a rewinder of the laminate or other rollers of the conveying path;
- a chill temperature for cooling the laminate;
- the electrical power which a corona station of the conveying path applies to the carrier film and/or the secondary film;
- a humidity in the lamination machine;
- a curing temperature (for curing the adhesive);
- a curing duration (for curing the adhesive).

Example 6 is the method of any one of examples 1 to 5, comprising training the machine-learning model by supervised or unsupervised learning.

Example 7 is the method of any one of examples 1 to 6, comprising training the machine-learning model by reinforcement learning.

Example 8 is the method of example 7, comprising determining performance parameters of the lamination process (e.g. quality parameters of the laminate or an energy consumption of the lamination process) and determining rewards for the reinforcement learning from the determined performance parameters.

Example 9 is the method of example 8, wherein the performance parameters are quality parameters of the laminate and the method comprises determining the quality parameters from one or more of
- a heat seal strength of the laminate
- a thermal resistance, e.g. the thermal sterilisation and/or pasteurization/boiling resistance of the laminate
- a filling goods resistance of the laminate
- a bond strength of the laminate
- a coefficient of friction
- a curling effect of the laminate
- a contents of primary aromatic amines
- a Wrinkles test performance
- a green tack of the adhesive
- an optical appearance of the laminate and
- a telescoping of the laminate.

Example 10 is the method of any one of examples 1 to 9, comprising collecting input data, pre-processing the input data to generate the one or more input parameters and supplying the one or more input parameters to the machine-learning model.

Example 11 is the method of any one of examples 1 to 10, wherein controlling the lamination process according to the one or more control parameters comprises receiving the one or more control parameters from the machine-learning model, generating one or more lamination machine control signals in accordance with the one or more control parameters and controlling the lamination machine by the one or more lamination machine control signals.

Example 12 is a lamination machine controller, configured to perform a method of any one of examples 1 to 11.

Example 13 is a computer program comprising instructions which, when executed by a computer, makes the computer perform a method according to any one of examples 1 to 11.

Example 14 is a computer-readable medium comprising instructions which, when executed by a computer, makes the computer perform a method according to any one of examples 1 to 11.

## Claims

1. A method for controlling a lamination process, in which a secondary film is laminated to a carrier film by means of an adhesive along a conveying path in a lamination machine to form a laminate, the method comprising:
determining one or more control parameters from a set of input parameters by means of a machine-learning model, wherein the set of input parameters includes one or more of:
a tension of the carrier film, the secondary film and/or the laminate at one or more points of the conveying path;
a temperature of one or more components of the conveying path;
a pressure applied to the carrier film, the secondary film and/or the laminate at one or more points of the conveying path;
a temperature of the carrier film, the secondary film, the adhesive and/or the laminate at one or more points of the conveying path;
an unwinding speed of the carrier film and/or the secondary film;
a rewinding speed of the laminate;
a coating weight of the adhesive;
an electrical power which a corona station of the conveying path applies to the carrier film and/or the secondary film;
a humidity and/or temperature of air surrounding the carrier film, the secondary film and/or components of the lamination machine;
material properties of the carrier film and/or the secondary film;
material properties of the uncured adhesive; and
controlling the lamination process according to the one or more control parameters.

2. The method of claim 1, comprising gathering sensor data and deriving values of the one or more input parameters of the set of input parameters from the sensor data.

3. The method of claim 2, wherein the sensor data comprises sensor data about the lamination process while it is being performed.

4. The method of claim 2 or 3, wherein the sensor data comprises sensor data about the carrier film, the secondary film, the adhesive and/or the lamination machine before the lamination process is performed.

5. The method of any one of claims 1 to 4, wherein the one or more control parameters include one or more of:
an adhesive selection;
an adhesive component mixing ratio;
an adhesive temperature;
an adhesive application pressure;
a gap temperature, distance and or pressure of one or more rollers of the conveying path;
a tension of an unwinder of the carrier substrate and/or the secondary substrate, of a rewinder of the laminate or other rollers of the conveying path;
a chill temperature for cooling the laminate;
the electrical power which a corona station of the conveying path applies to the carrier film and/or the secondary film;
a humidity in the lamination machine;
a curing temperature;
a curing duration.

6. The method of any one of claims 1 to 5, comprising training the machine-learning model by supervised or unsupervised learning.

7. The method of any one of claims 1 to 6, comprising training the machine-learning model by reinforcement learning.

8. The method of claim 7, comprising determining performance parameters of the lamination process and determining rewards for the reinforcement learning from the determined performance parameters.

9. The method of claim 8, wherein the performance parameters are quality parameters of the laminate and the method comprises determining the quality parameters from one or more of
a heat seal strength of the laminate;
a thermal resistance;
a filling goods resistance of the laminate;
a bond strength of the laminate;
a coefficient of friction;
a curling effect of the laminate;
a contents of primary aromatic amines;
a Wrinkles test performance;
a green tack of the adhesive;
an optical appearance of the laminate; and
a telescoping of the laminate.

10. The method of any one of claims 1 to 9, comprising collecting input data, pre-processing the input data to generate the one or more input parameters and supplying the one or more input parameters to the machine-learning model.

11. The method of any one of claims 1 to 10, wherein controlling the lamination process according to the one or more control parameters comprises receiving the one or more control parameters from the machine-learning model, generating one or more lamination machine control signals in accordance with the one or more control parameters and controlling the lamination machine by the one or more lamination machine control signals.

12. A lamination machine controller, configured to perform a method of any one of claims 1 to 11.

13. A computer program comprising instructions which, when executed by a computer, makes the computer perform a method according to any one of claims 1 to 11.

14. A computer-readable medium comprising instructions which, when executed by a computer, makes the computer perform a method according to any one of claims 1 to 11.
